# EUROPÄISCHE PATENTSCHRIFT

(11) **EP 2 536 632 B1**
(45) Veröffentlichungstag und Bekanntmachung des Hinweises auf die Patenterteilung: **01.06.2016**
(21) Anmeldenummer: 11701256.7
(22) Anmeldetag: 26.01.2011
(51) Int. Cl.: B64D 13/06, B64D 13/00

(54) **ZULUFTVERSORGUNG FÜR PASSAGIERE IN FLUGZEUGEN**
INLET AIR SUPPLY FOR PASSENGERS IN AIRCRAFT
ALIMENTATION EN AIR FRAIS POUR LES PASSAGERS D'UN AVION

(30) Priorität: 19.02.2010 US 306198 P; 19.02.2010 DE 102010008626
(43) Veröffentlichungstag der Anmeldung: 26.12.2012
(73) Patentinhaber: Airbus Operations GmbH, 21129 Hamburg (DE)
(72) Erfinder: SCHNEIDER, Uwe, 21635 Jork (DE); LANG, Dorothee, 25421 Pinneberg (DE); UMLAUFT, Sebastian, 22767 Hamburg (DE); WITTKUGEL, Jorinde, 29683 Bad Fallingbostel (DE); ROLLFINK, Patrick, 22763 Hamburg (DE)
(74) Vertreter: Kopf Westenberger Wachenhausen Patentanwälte PartG mbB
(86) Internationale Anmeldenummer: PCT/EP2011/051057
(87) Internationale Veröffentlichungsnummer: WO 2011/101211

(56) Entgegenhaltungen:
- WO-A1-02/12007
- AU-B2- 602 964
- FR-A1- 2 328 610
- US-A- 3 223 019

## Beschreibung

Die vorliegende Anmeldung beansprucht die Priorität der US Provisional

Patentanmeldung Nr. 61/306,198, eingereicht am 19. Februar 2010 und der deutschen Patentanmeldung Nr. 10 2010 008 626.6, eingereicht am 19. Februar 2010.

### Gebiet der Erfindung

Die Erfindung betrifft ein Zuluftsystem für Passagiere in einem Passagierraum von zum Beispiel einem Flugzeug. Insbesondere betrifft die Erfindung ein System zur Verteilung von Zuluft zur individuellen Versorgung von Passagieren.

### Hintergrund der Erfindung

Aus der DE 10 2008 026 093 A1 geht ein System hervor zur Ventilation einer Flugzeugkabine mit einem Luftzufuhrrohr, das mit einer Luftquelle verbunden ist, und einer Mehrzahl von Luftverteilungsleitungen, die von dem Luftzufuhrrohr abzweigen. Dieses System ist geeignet, zumindest einen Teil der Luft in der Flugzeugkabine verteilt angeordneten Luftauslässen zuzuführen.

Aus der DE 10 2007 014 406 B3 ist ein Versorgungskanal mit einem Luftverteilungssystem beschrieben, welcher ein längliches Gehäuse, ein sich in Längsrichtung des Gehäuses erstreckendes Hohlprofil und wenigstens eine Luftdusche mit einem Lufteinlass und wenigstens einem Luftauslass aufweist. In einer Manteloberfläche des Hohlprofils ist eine Vielzahl von Perforationsöffnungen ausgebildet. Die Luftdusche ist derart ausgestaltet, dass sie in einem Bereich des Lufteinlasses dicht an der Manteloberfläche des Hohlprofils anliegt. In einem Lufteinlass einer Luftdusche mündende Perforationsöffnungen können durch eine aufgeklebte Klebefolie abgedichtet werden. Der Versorgungskanal ermöglicht ein variables Positionieren von Luftduschen entlang der Längsrichtung des Versorgungskanals.

Bei derartigen Luftverteilungssystemen besteht jedoch das Problem, dass die Luftduschen an die jeweiligen Sitzpositionen angepasst werden müssen, was ein erhebliches Installationserschwernis in der Kabinenaus- und Umrüstung darstellt. Dies schränkt die Flexibilität der Kabinenausstattung stark ein, da zu einem sehr frühen Definitionszeitpunkt die Flugzeugbauunterlagen und Systemprovisionen (Anschlussstellen) festgelegt sein müssen.

Aus der AU 602964 B2 geht ein Luftsystem hervor, welches den Oberbegriff des ersten Anspruchs offenbart und als nächstliegender Stand der Technik angesehen wird.

### Zusammenfassung der Erfindung

Es ist eine Aufgabe der Erfindung, ein Zuluftsystem bereitzustellen, welches leicht an ein geändertes Sitz-Layout angepasst werden kann. Diese und weitere Aufgaben werden durch den Gegenstand der jeweiligen unabhängigen Ansprüche erfüllt. Weitere Ausführungsformen sind in den abhängigen Ansprüchen beschrieben.

Im Allgemeinen weist ein Zuluftsystem für Passagiere gemäß der Erfindung ein Luft-Verteilungselement und ein Auswahlelement auf. Auf der einen Seite weist das Luft-Verteilungselement eine Reihe von Öffnungen auf, und auf der anderen Seite weist das Auswahlelement eine Gestaltung auf, welche es ermöglicht, diese Reihe von Öffnungen zu verschließen bzw. freizugeben. Das Luft-Verteilungselement und das Auswahlelement sind derart relativ zueinander bewegbar, dass ein Luftstrom durch die Mehrzahl der Öffnungen je nach Stellung des Luft-Verteilungselementes und des Auswahlelementes relative zueinander ermöglicht oder blockiert wird. Gemäß einer Ausführungsform der Erfindung weist das Luft-Verteilungselement zumindest zwei Reihen von Öffnungen auf, wobei der Abstand der Öffnungen zueinander in der einen Reihe unterschiedlich zu dem Abstand der Öffnungen zueinander in der anderen Reihe ist.

Vorzugsweise ist der Abstand zwischen zwei Öffnungen in einer Reihe so gewählt, dass er zu einem möglichen Sitzabstand korrespondiert, so dass, wenn diese Reihe von Öffnungen durch das Auswahlelement freigegeben ist, jeweils eine Öffnung über einer Sitzreihe freigegeben ist und die Passagiere jeder einzelnen Sitzreihe mit Luft versorgt werden können.

Eine zweite Reihe von Öffnungen weist einen Abstand zwischen den jeweiligen Öffnungen auf welcher zu einem anderen Sitzabstand bzw. Sitz-Layout korrespondiert. Auf diese Weise wird je nach Stellung des Luft-Verteilungselementes und des Auswahlelementes relativ zueinander ein Luftstrom durch die Öffnungen von einer der Reihen ermöglicht, wobei die Öffnungen der anderen Reihen abgedeckt und damit ein entsprechender Luftstrom blockiert wird.
Sobald das Sitz-Layout in einem Passagierraum von zum Beispiel einem Flugzeug geändert wird, bedarf es lediglich einer Änderung der Stellung des Luft-Verteilungselementes relativ zu dem Auswahlelement, um das Zuluftsystem an das geänderte Sitz-Layout anzupassen.
Gemäß einer Ausführungsform der Erfindung sind die Öffnungen von einer Reihe entlang einer Längsrichtung des Luft-Verteilungselementes angeordnet.

Das Zuluftsystem gemäß der Erfindung kann ferner eine Luft-Aufbereitungseinheit aufweisen, welche je nach konkreter Ausgestaltung des Luft-Verteilungselementes bzw. des Auswahlelementes aufbereitete Luft, das heißt Luft mit zum Beispiel gewünschter Luftfeuchtigkeit und Temperatur, welche außerdem gefiltert sein kann, in das Luft-Verteilungselement bzw. das Auswahlelement einzubringen.

Das Zuluftsystem gemäß der Erfindung kann ferner mehrere Passagier-Versorgungseinheiten aufweisen, welche so angeordnet sind, dass sie jeweils einer Öffnung der Reihe von Öffnungen zugeordnet sind. Üblicherweise weisen solche Passagier-Versorgungseinheiten Luftdüsen auf, welche geöffnet und geschlossen werden können bzw. in ihrer Ausrichtung veränderbar sind.

Wenn das Luft-Verteilungselement und das Auswahlelement so relativ zueinander angeordnet sind, dass diejenige Reihe von Öffnungen freigegeben ist, welche einen Abstand zwischen den jeweiligen Öffnungen aufweist, der zu dem Abstand zwischen zwei Sitzreihen in einem spezifischen Sitz-Layout korrespondiert, kann aufbereitete Luft gezielt einem jeweiligen Passagier zugeführt werden.

Gemäß einer Ausführungsform der Erfindung wird das Zuluftsystem in einem Flugzeug verwendet zur Versorgung der Passagiere mit individueller Zuluft. Hierbei sei angemerkt, dass das Zuluftsystem auch in einem beliebigen Passagier-Beförderungsmittel, wie etwa in einem Bus, einem Waggon einer Bahn, oder einem Schiff eingesetzt werden kann.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### Kurze Beschreibung der Zeichnungen

Fig. 1 ist eine Längsschnitt-Darstellung eines Flugzeug-Passagierraums.
Fig. 2 ist eine Querschnitt-Darstellung eines Flugzeug-Passagierraums mit einem Zuluftsystem gemäß der Erfindung oberhalb der Sitzreihen.
Fig. 3a zeigt ein Luft-Verteilungselement gemäß einer Ausführungsform der Erfindung.
Fig. 3b zeigt ein Luft-Verteilungselement, in einem Auswahlelement montiert.
Fig. 4 zeigt ein Zuluftsystem gemäß einer weiteren Ausführungsform der Erfindung.
Fig. 5 zeigt ein Zuluftsystem gemäß noch einer weiteren Ausführungsform der Erfindung.
Fig. 6 ist eine schematische Darstellung eines Luft-Verteilungselementes gemäß der Erfindung.
Fig. 7 zeigt ein Zuluftsystem gemäß einer weiteren Ausführungsform der Erfindung.
Fig. 8 zeigt ein Zuluftsystem gemäß der Erfindung mit einem Übergangsprofil.
Fig. 9 zeigt ein Zuluftsystem gemäß der Erfindung mit mehreren Passagier-Versorgungseinheiten.
Fig. 10 zeigt ein Zuluftsystem gemäß der Erfindung mit einer verschiebbaren Passagier-Versorgungseinheit.

### Detaillierte Beschreibung der Ausführungsformen

Ein Zuluftsystem gemäß der Erfindung weist einen in Längsrichtung durchgängigen Kanal für die Versorgung der Passagiere mit Zuluft mit in ihrer Position veränderlichen Öffnungen bzw. Abnehmern auf. Dadurch ist für jede mögliche Sitzanordnung eine Versorgung der Passagiere mit Zuluft gewährleistet, ohne dass die Vorrichtung umgebaut werden muss. Der Kanal kann als Endlosprofil vorliegen oder aber vormontiert am Hatrack. Es sind keine Infill-Panels und somit keine neuen Teile für eine Umrüstung nötig.

Es können mehrere Reihen von Öffnungen mit jeweils unterschiedlichen Abständen zwischen den einzelnen Öffnungen vorgesehen sein. Nicht benötigte Öffnungen werden verschlossen, beispielsweise durch ein weiteres Rohr, das die Luftleitung umschließt. Durch einen Schlitz in dem weiteren Rohr kann gezielt eine bestimmte Reihe von Öffnungen offen gelassen werden. Durch ein Verdrehen der Luftleitung, zum Beispiel pneumatisch gesteuert, kann von einer Reihe mit Öffnungen in einem ersten Abstand zu einer anderen Reihe mit Öffnungen in einem anderen Abstand umgeschaltet werden. Es werden nur bestimmte Öffnungen freigegeben, die an fixe oder verschiebbar verstellbare Luftdüsen oder voreingestellte einfache Luftauslässe anschließen.

Durch die begrenzte Anzahl an möglichen Sitzabständen gibt es pro Hatrack höchstens zwei Luftauslässe, die benötigt werden. Bei einem Abstand der Luftauslässe von ca. 8 Zoll (20,32 cm) kann so jede Sitzkonfiguration versorgt werden. Die benötigten Luftauslässe können durch die Luftleitung mit umlaufenden Bohrungen und Abdeckung, wie im Folgenden dargestellt und beschrieben, einzeln angesteuert werden.

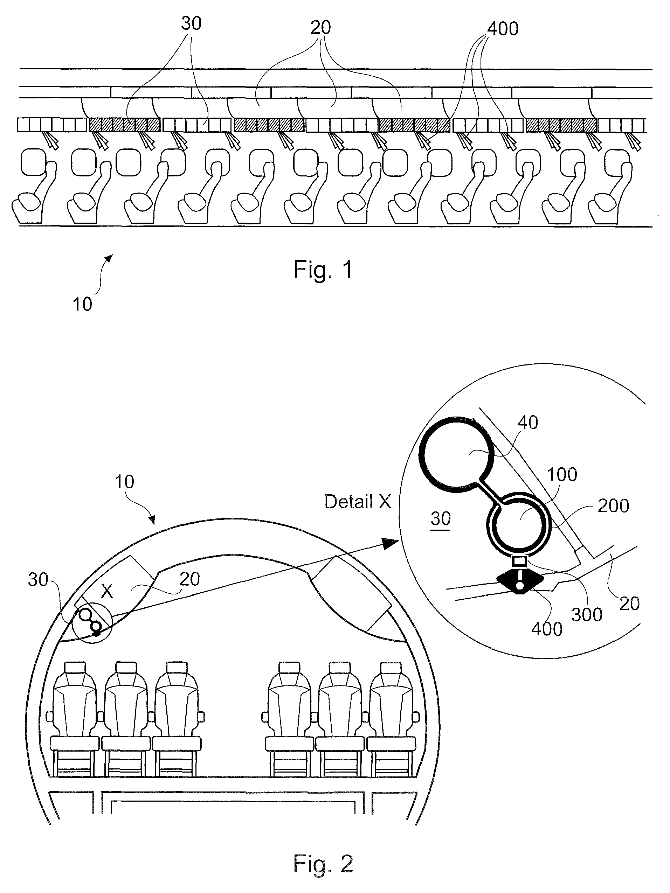

Fig. 1 zeigt einen Längsschnitt durch einen Passagierraum eines Flugzeugs. In dem Passagierraum 10 sind eine Mehrzahl von Sitzreihen angeordnet. Über den Sitzreihen befinden sich Hatracks oder Staufächer 20 sowie Passagier-Versorgungseinheiten 30 zur Versorgung der Passagiere mit Signalen, Informationen, elektrischen oder elektronischen Anschlüssen sowie mit Frischluft. Wie in Fig. 1 dargestellt, sind jeder einzelnen Sitzreihe zugeordnete Luftdüsen 400 vorgesehen, die an dem Passagier-Versorgungskanal 30 in einem korrespondierenden Abstand zueinander angeordnet sind.

Fig. 2 zeigt einen Querschnitt durch einen Passagierraum eines Flugzeugs. In dem Passagierraum 10 sind über den Sitzen Staufächer 20 sowie Passagier-Versorgungskanäle 30 dargestellt. Innerhalb des Passagier-Versorgungskanals 30 ist ein exemplarisches Zuluftsystem gemäß der Erfindung dargestellt (insbesondere in Detail X). Das Zuluftsystem weist eine Luft-Aufbereitungseinheit 40, ein Luft-Verteilungselement 100, ein Auswahlelement 200, ein Übergangsprofil 300 sowie eine Luftdüse 400 auf, welche in ein Verkleidungsteil 20 eingesetzt ist.

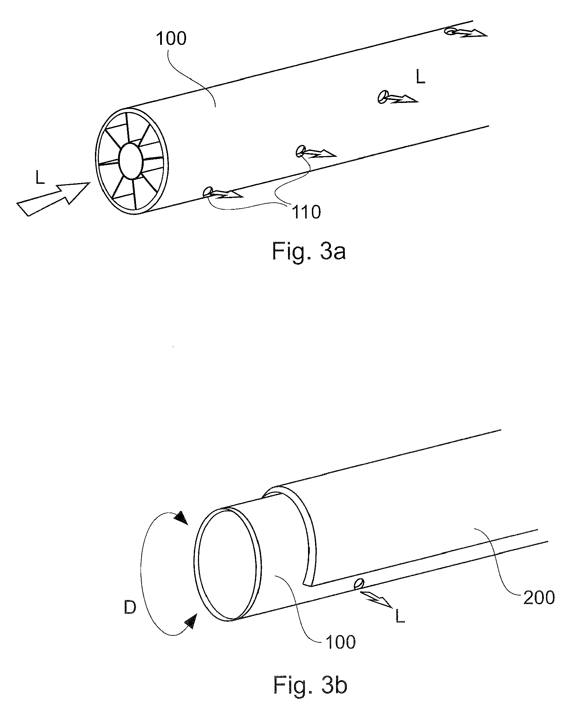

Fig. 3a zeigt ein Luft-Verteilungselement 100 eines Zuluftsystems gemäß der Erfindung, wobei das Luft-Verteilungselement als Rohr ausgebildet ist und eine wabenförmige innere Struktur aufweist, durch die Luft zu den Öffnungen 110 in der Außenwand des Rohrs geleitet werden kann.

Fig. 3b zeigt ein Zuluftsystem gemäß der Erfindung, wobei das Luft-Verteilungselement 100als Rohr ausgebildet ist und das Auswahlelement einen Schlitz aufweist, welcher zu einer Reihe von Öffnungen korrespondiert, so dass nur eine bestimmte Reihe von Öffnungen von dem Schlitz in dem Auswahlelement freigegeben wird. Das Luft-Verteilungselement ist bewegbar in dem Auswahlelement angeordnet, so dass durch eine Drehung des Luft-Verteilungselementes 100 in Pfeilrichtung D eine gewünschte Reihe von Öffnungen 110 relativ zu dem Schlitz in dem Auswahlelement 200 ausgerichtet werden können.

Gemäß dieser Ausführungsform wird Luft in Pfeilrichtung L in eine Stirnseite des Luft-Verteilungselementes 100 eingeblasen. Diese Luft tritt nur durch diejenigen Öffnungen 110 aus dem Luft-Verteilungselement 100 wieder aus, welche nicht von dem Auswahlelement 200 abgedeckt sind.

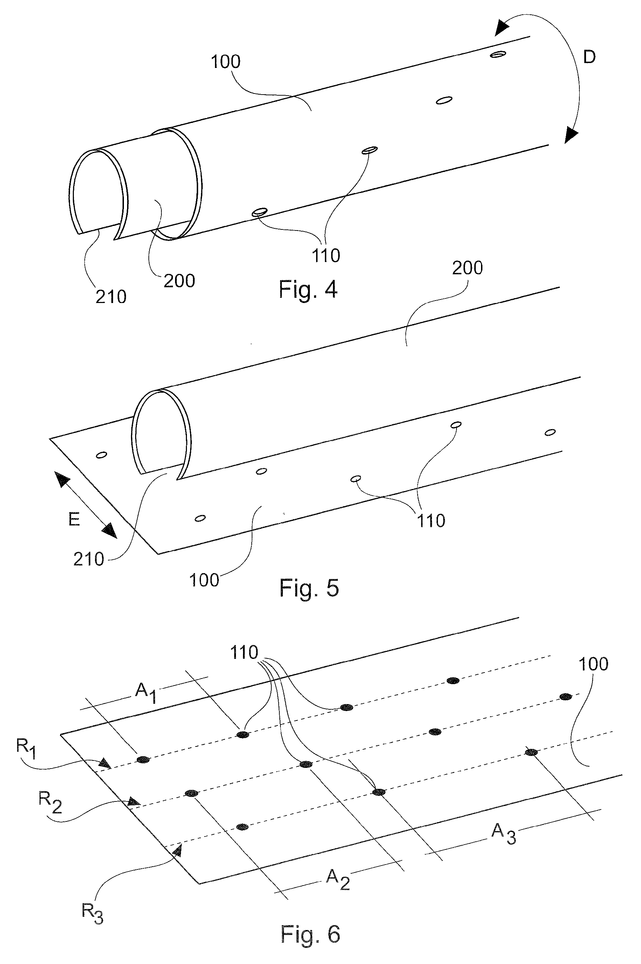

Fig. 4 zeigt ein Zuluftsystem gemäß der Erfindung, wobei das Luft-Verteilungselement 100 als Rohr ausgebildet ist und das Auswahlelement ebenfalls einen Schlitz aufweist, welcher zu einer Reihe von Öffnungen korrespondiert, wobei in diesem Fall das Luft-Verteilungselement 100 bewegbar um das Auswahlelement 200 herum angeordnet ist.

Gemäß dieser Ausführungsform wird Luft an einer Stirnseite des Auswahlelementes 200 in dieses eingeblasen, wobei diese Luft nur an denjenigen Stellen durch den Schlitz in dem Auswahlelement 200 wieder entweichen kann, an welchen ebenfalls eine Öffnung 110 des Luft-Verteilungselementes 100 angeordnet ist.

Fig. 5 zeigt ein Zuluftsystem einer weiteren Ausführungsform gemäß der Erfindung, wobei das Luft-Verteilungselement als Platte ausgebildet ist und das Auswahlelement ebenfalls einen Schlitz aufweist. Das Luft-Verteilungselement 100 ist bewegbar vor dem Schlitz 210 des Auswahlelementes 200 angeordnet. Auch hier wird Luft in das Auswahlelement 200 eingeblasen, wobei diese Luft jedoch nur dort aus dem Schlitz entweichen kann, wo Öffnungen 110 des Luft-Verteilungselementes 100 ebenfalls angeordnet sind. Durch eine Verschiebung des Luft-Verteilungselementes 100 in Pfeilrichtung E quer zur Längsrichtung des Auswahlelementes 200 kann zwischen mehreren Reihen von Öffnungen gewechselt werden.

Fig. 6 zeigt eine schematische Darstellung eines Luft-Verteilungselementes 100 mit mehreren Reihen R1, R2 und R3 von Öffnungen 110. In dieser exemplarischen Darstellung sind die Öffnungen 110 der Reihe R1 jeweils im Abstand A1 voneinander angeordnet. Die Öffnungen 110 der Reihe R2 sind im Abstand A2 relativ zueinander angeordnet. Die Öffnungen 110 der Reihe R3 sind im Abstand A3 relativ zueinander angeordnet. In diesem Beispiel ist der Abstand A1 kleiner als der

Abstand A2, welcher seinerseits kleiner als der Abstand A3 ist. Die Darstellung in Fig. 6 ist insbesondere geeignet, die Anordnung von mehreren Reihen von Öffnungen in einem Luft-Verteilungselement 100 zu veranschaulichen.

Eine derartige Anordnung von Öffnungen 110 könnte beispielsweise in einem Luft-Verteilungselement gemäß der Ausführungsform, die in Fig. 5 dargestellt ist, in einer Platte ausgebildet sein.

Bildet man eine Mantelfläche eines Rohres aus der in Fig. 6 in einer Ebene dargestellten Anordnung von Reihen von Öffnungen, so kann ein Luft-Verteilungselement bereitgestellt werden, wie es beispielsweise in den Fig. 3 und 4 dargestellt ist.

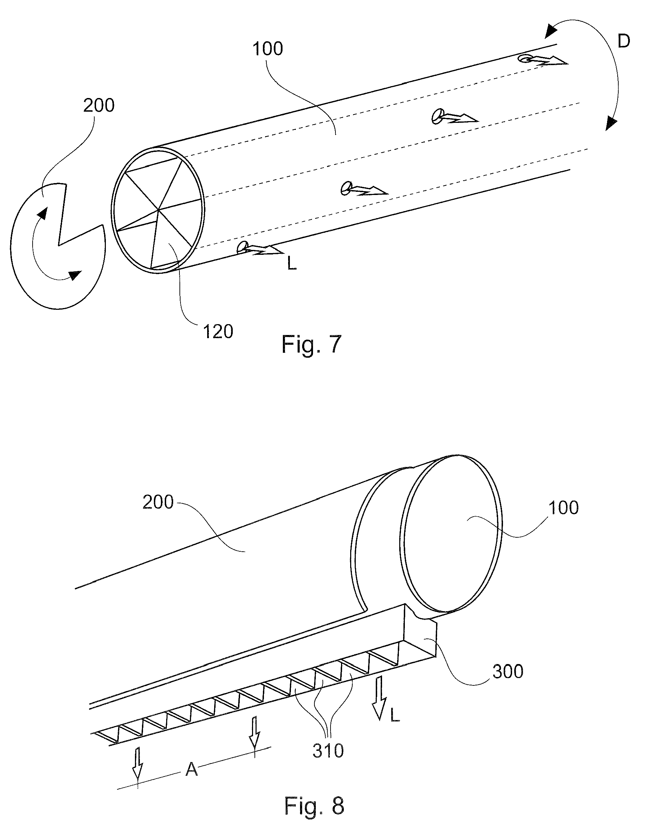

Fig. 7 zeigt eine weitere Ausführungsform gemäß der Erfindung, wobei das Luft-Verteilungselement 100 als Stranggussprofil mit einer Mehrzahl von in Längsrichtung ausgebildeten Kammern ausgebildet ist. Eine Reihe von Öffnungen ist in der Außenwand einer bestimmten Kammer vorgesehen. Gemäß dieser Ausführungsform ist das Auswahlelement 200 am Lufteinlass des Luft-Verteilungselementes 100 angeordnet und ist geeignet, den Luftstrom in eine bestimmte Kammer zu leiten und die anderen Kammern abzudecken. Auf diese Weise kann ein Luftaustritt durch Öffnungen in der Außenwand einer bestimmten Kammer ermöglicht werden. Durch ein Verdrehen in Pfeilrichtung D des Luft-Verteilungselementes 100 relative zu dem Auswahlelement 200 kann der Luftstrom durch eine andere Kammer realisiert werden, welche mit einer Reihe von Öffnungen ausgestattet ist, welche in einem größeren oder auch kleineren Abstand relativ zueinander angeordnet sind.

Es wird angemerkt, dass andere Variationen der exemplarisch in den Fig. 3, 4, 5, 7 dargestellten Ausführungsformen durch einen Fachmann beim Umsetzen der beanspruchten Erfindung verstanden und bewirkt werden können.

In Fig. 8 ist ein Luft-Verteilungselement 100 sowie ein Auswahlelement 200 dargestellt. An der Position des Schlitzes in dem Auswahlelement 200 ist ein längliches Profilelement 300 dargestellt, welches aus einer Reihe von Luftdurchlässen 310 besteht. Das Profilelement 300 kann so gestaltet sein, dass die Luftdurchlässe 310 in einem minimalen Abstand zueinander angeordnet sind, so dass korrespondierend zu allen Öffnungen 110 in dem Luft-Verteilungselement 100 ein Luftdurchlass 310 ausgebildet ist. Wie in Fig. 8 dargestellt, tritt in einer bestimmten Kombination nur in einzelnen Luftdurchlässen im Abstand A voneinander Luft L aus.

Je nach Bauraum innerhalb des Passagier-Versorgungskanals 30 kann es vorteilhaft sein, zwischen dem Luft-Verteilungselement und dem Auswahlelement sowie einer Luftdüse ein Profilelement 300 vorzusehen.

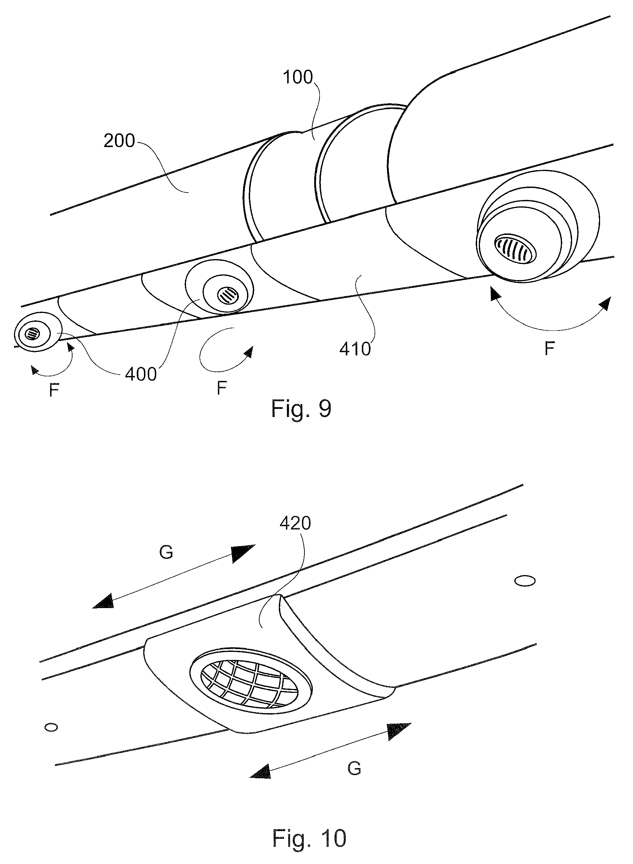

Wie in Fig. 9 dargestellt, können beispielsweise Luftdüsen 400 vorgesehen sein, um die Luft aus den Öffnungen des Luft-Verteilungselementes 100 komfortabel für einen Passagier regelbar zu machen. Die Luftdüsen 400 in Fig. 9 sind Kugelelemente, welche in den Pfeilrichtungen F schwenk- und rotierbar sind, um eine gewünschte Ausströmrichtung der Luft einzustellen.

Zwischen den Luftdüsen 400 sind Paneele 410 als Verkleidungselemente vorgesehen.

In Fig. 10 ist eine Luftdüse 420 gemäß einer anderen Ausführungsform dargestellt. Diese Luftdüse 420 zeichnet sich dadurch aus, dass sie entlang des Luft-Verteilungselementes in Pfeilrichtung G verschiebbar ausgebildet ist. Im Falle eines Umbaus des Sitz-Layouts kann mit einer Luftdüse 420 entsprechend der Position der Öffnungen einer anderen Reihe mit größerem Abstand zwischen den jeweiligen Öffnungen, die Position der Luftdüse über einfaches Verschieben derselben angepasst werden.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken.

### Bezugszeichenliste

- 10: Passagierraum
- 20: Hatrack
- 30: Passagier-Versorgungskanal
- 40: Luft-Aufbereitungseinheit
- 100: Luft-Verteilungselement
- 110: Öffnungen
- 120: Kanal
- 200: Auswahlelement
- 210: Schlitz
- 300: Profilelement
- 310: Luftdurchlass
- 400: Luftdüse
- 410: Paneel
- 420: Verschiebbare Luftdüse
- R1, R2, R3: Reihe
- A1, A2, A3: Abstand zwischen Öffnungen einer Reihe
- D, E, F, G: Bewegungsrichtungen
- L: Luftstrom

## Patentansprüche

1. Zuluftsystem für Passagiere aufweisend:
ein Luft-Verteilungselement (100) und
ein Auswahlelement (200),
wobei das Luft-Verteilungselement (100) zumindest zwei Reihen (R1, R2, R3) von Öffnungen (110) aufweist, wobei die Öffnungen (110) in regelmäßigen Abständen (A1, A2, A3) zueinander angeordnet sind, wobei der Abstand (A1) der Öffnungen (110) zueinander in einer Reihe (R1) unterschiedlich zu dem Abstand (A2, A3) der Öffnungen (110) zueinander in einer anderen Reihe (R2, R3) ist,
wobei das Luft-Verteilungselement (100) und das Auswahlelement (200) derart relativ zueinander bewegbar sind, dass ein Luftstrom (L) durch die Mehrzahl der Öffnungen (110) je nach Stellung des Luft-Verteilungselementes (100) und des Auswahlelementes (200) ermöglicht oder blockiert wird, **dadurch gekennzeichnet, dass** je nach Stellung des Luft-Verteilungselementes (100) und des Auswahlelementes (200) relativ zueinander ein Luftstrom (L) durch die Öffnungen (110) von einer der Reihen (R1) ermöglicht wird, wobei die Öffnungen (110) der anderen Reihen (R2, R3) abgedeckt und damit ein entsprechender Luftstrom blockiert wird.

2. Zuluftsystem nach Anspruch 1, wobei die Öffnungen (110) einer Reihe (R1, R2, R3) entlang einer Längsrichtung des Luft-Verteilungselementes (100) angeordnet sind.

3. Zuluftsystem nach Anspruch 1, wobei das Luft-Verteilungselement (100) als Rohr ausgebildet ist, wobei das Auswahlelement (200) einen Schlitz (210) aufweist, welcher zu der Reihe (R1, R2, R3) von Öffnungen (110) korrespondiert und wobei das Luft-Verteilungselement bewegbar in dem Auswahlelement angeordnet ist.

4. Zuluftsystem nach Anspruch 1, wobei das Luft-Verteilungselement (100) als Rohr ausgebildet ist, wobei das Auswahlelement (200) einen Schlitz (210) aufweist, welcher zu der Reihe (R1, R2, R3) von Öffnungen (110) korrespondiert, und wobei das Luft-Verteilungselement bewegbar um das Auswahlelement herum angeordnet ist.

5. Zuluftsystem nach Anspruch 1, wobei das Luft-Verteilungselement (100) als Platte ausgebildet ist, wobei das Auswahlelement (200) einen Schlitz aufweist, welcher zu der Reihe von Öffnungen korrespondiert, und wobei das Luft-Verteilungselement bewegbar vor dem Schlitz des Auswahlelementes angeordnet ist.

6. Zuluftsystem nach Anspruch 1, wobei das Luft-Verteilungselement (100) als Stranggussprofil mit einer Mehrzahl von in Längsrichtung ausgebildeter Kammern (120) ausgebildet ist, wobei die Reihe von Öffnungen in der Außenwand einer Kammer vorgesehen ist, und wobei das Auswahlelement geeignet ist, den Luftstrom in diese Kammer hinein zu ermöglichen oder zu blockieren.

7. Zuluftsystem nach Anspruch 1, welches ferner eine Luft-Aufbereitungseinheit (40) aufweist.

8. Zuluftsystem nach Anspruch 1, welches ferner mehrere Passagier-Versorgungseinheiten (30) aufweist, welche so angeordnet sind, dass sie jeweils einer Öffnung der Reihe von Öffnungen zugeordnet sind.

9. Flugzeug mit einem Zuluftsystem nach Anspruch 1 zur Versorgung der Passagiere mit individueller Zuluft.

## Claims

1. An inlet air inlet system for passengers, comprising:
an air distribution element (100); and a selection element (200), wherein the air distribution element (100) comprises at least first and second rows (R1, R2, R3) of openings (110), the openings (110) being arranged at regular mutual spacings (A1, A2, A3), wherein the spacing (A1) of the openings (110) in the first row (R1) is different from the spacing (A2, A3) of the openings (110) in the second row (R2, R3),wherein the air distribution element (100) and the selection element (200) are movable relative to one another in such a way that an air current (L) through the plurality of openings (110) is made possible or blocked in accordance with the positioning of the air distribution element (100) and the selection element (200),
**characterized in that** in accordance with the positioning of the air distribution element (100) and the selection element (200) relative to one another a current air (L) through the openings (110) of one of the rows (R1) is made possible, wherein the openings (110) of the other rows (R2, R3) are covered so that a corresponding current air is blocked.

2. The air inlet system according to claim 1, wherein the openings (100) of a row (R1, R2, R3) are arranged along a longitudinal direction of the air distribution element (100).

3. The air inlet system according to claim 1, wherein the air distribution element (100) comprises a pipe, wherein the selection element (200) has a slit (210) corresponding to at least one of the first and second rows (R1, R2, R3) of openings (110), and wherein the air distribution element is arranged movably in the selection element.

4. The air inlet system according to claim 1, wherein the air distribution element (100) comprises a pipe, wherein the selection element (200) comprises a slit (210) corresponding to at least one of the rows (R1, R2, R3) of openings (110), and wherein the air distribution element is arranged movably about the selection element.

5. The air inlet system according to claim 1, wherein the air distribution element (100) comprises a plate, wherein the selection element (200) comprises a slit corresponding to at least one of the rows of openings, and wherein the air distribution element is arranged movably in front of the slit of the selection element.

6. The air inlet system according to claim 1, wherein the air distribution element (100) comprises a strand-cast profile comprising a plurality of chambers (120) formed in the longitudinal direction, wherein the rows of openings are provided in the outer wall of one of the plurality of chambers, and wherein the selection element is adapted for making possible or blocking the airflow into this chamber.

7. The air inlet system according to claim 1, further comprising an air preparation unit (40).

8. The air inlet system according to claim 1, further comprising a plurality of passenger supply units (30) arranged in such a way that each one of the plurality of passenger supply units is allocated to an opening of the rows of openings.

9. An aircraft comprising an air inlet system for supplying the passengers with individual incoming air.

## Revendications

1. Système d'alimentation en air frais pour passagers, présentant :
un élément de répartition d'air (100) et
un élément de sélection (200),
l'élément de répartition d'air (100) présentant au moins deux rangées (R1, R2, R3) d'orifices (110), les orifices (110) étant disposés à écarts réguliers (A1 A2, A3) les uns par rapport aux autres, l'écart (A1 des orifices (110) l'un par rapport à l'autre dans une rangée (R1 étant différent de l'écart (A2, A3) des orifices (110) l'un par rapport à l'autre dans une autre rangée (R2, R3),
l'élément de répartition d'air (100) et l'élément de sélection (200) étant déplaçables l'un par rapport à l'autre de manière à ce qu'un courant d'air (L) soit rendu possible à travers la pluralité des orifices (110) selon la position de l'élément de répartition d'air (100) et de l'élément de sélection (200) ou qu'il soit bloqué,
**caractérisé en ce que**,
selon la position de l'élément de répartition d'air (100) et de l'élément de sélection (200) l'un par rapport à l'autre, un courant d'air (L) est rendu possible à travers les orifices (110) de l'une des rangées (R1, les orifices (110) des autres rangées (R2, R3) étant recouverts et un courant d'air correspondant étant ainsi bloqué.

2. Système d'alimentation en air frais selon la revendication 1, les orifices (110) d'une rangée (R1 R2, R3) étant disposés le long d'un sens longitudinal de l'élément de répartition d'air (100).

3. Système d'alimentation en air frais selon la revendication 1, l'élément de répartition d'air (100) étant réalisé comme tube, l'élément de sélection (200) présentant une fente (210) qui correspond à la rangée (R1 R2, R3) d'orifices (110) et l'élément de répartition d'air étant disposé de manière déplaçable dans l'élément de sélection.

4. Système d'alimentation en air frais selon la revendication 1, l'élément de répartition d'air (100) étant réalisé comme tube, l'élément de sélection (200) présentant une fente (210) qui correspond à la rangée (R1 R2, R3) d'orifices (110) et l'élément de répartition d'air étant disposé de manière déplaçable autour de l'élément de sélection.

5. Système d'alimentation en air frais selon la revendication 1, l'élément de répartition d'air (100) étant réalisé comme plaque, l'élément de sélection (200) présentant une fente qui correspond à la rangée d'orifices, et l'élément de répartition d'air étant disposé de manière déplaçable devant la fente de l'élément de sélection.

6. Système d'alimentation en air frais selon la revendication 1, l'élément de répartition d'air (100) étant réalisé comme profilé coulé en continu comprenant une pluralité de chambres (120) réalisées en sens longitudinal, la rangée d'orifices étant ménagée dans la paroi extérieure d'une chambre, et l'élément de sélection étant apte à permettre au courant d'air d'entrer dans cette chambre ou à le bloquer.

7. Système d'alimentation en air frais selon la revendication 1, lequel présente en outre une unité de traitement d'air (40).

8. Système d'alimentation en air frais selon la revendication 1, lequel présente en outre plusieurs unités d'alimentation (30) pour passagers, lesquelles sont disposées de manière à ce qu'elles soient respectivement attribuées à un orifice de la rangée d'orifices.

9. Avion comprenant un système d'alimentation en air frais selon la revendication 1, destiné à alimenter les passagers en air frais individuel.
